(19) Europäisches Patentamt
European Patent Office
Office européen des brevets

(11) Numéro de publication : **0 041 893**
**B1**

(12) # FASCICULE DE BREVET EUROPÉEN

(45) Date de publication du fascicule du brevet :
05.09.84

(51) Int. Cl.³ : **B 23 K 11/30**, B 23 K 11/08,
B 23 K 11/06

(21) Numéro de dépôt : 81400892.6

(22) Date de dépôt : 04.06.81

(54) **Machine à souder, notamment pour corps de boîte de conserve.**

(30) Priorité : 05.06.80 FR 8012493

(43) Date de publication de la demande :
16.12.81 Bulletin 81/50

(45) Mention de la délivrance du brevet :
05.09.84 Bulletin 84/36

(84) Etats contractants désignés :
BE CH DE FR GB IT LI NL SE

(56) Documents cités :
EP-A- 0 023 753
FR-A- 1 483 981
FR-A- 2 419 134

(73) Titulaire : Soudronic AG
Industriestr. 35
CH-8962 Bergdietikon (CH)

(72) Inventeur : Riviere, Maurice
55, Rue de Sèvres
F-92100 Boulogne Billancourt (FR)

(74) Mandataire : CABINET BONNET-THIRION
95 Boulevard Beaumarchais
F-75003 Paris (FR)

## Description

La présente invention concerne d'une manière générale le soudage électrique de deux tôles superposées, et vise plus particulièrement, mais non exclusivement, le cas où ces deux tôles sont formées par les bords longitudinaux d'un corps de boîte, notamment de boîte pour conserve, résultant du roulage d'un flan initialement plat.

Il a été proposé, notamment par le brevet français n° 1 258 185, d'assurer en continu un tel soudage, avec une machine comportant deux électrodes, qui ménagent entre elles un passage de travail dans lequel les tôles à souder sont admises à défiler pendant leur soudage, et dont chacune est formée par un fil métallique qui, passé sur une molette, de préférence rotative mais fixe en position, accompagne lesdites tôles lors de leur soudage, le courant de soudage nécessaire au soudage recherché étant délivré à ces électrodes par impulsions.

La présente invention se rapporte très précisément à une machine de ce type, qui, fonctionnant en continu, est avantageusement susceptible d'une cadence de travail élevée.

En pratique, dans le brevet français n° 1 258 185, le fil d'une électrode enveloppe la molette correspondante, au moins sur une partie de la périphérie de celle-ci, mais en tout cas dans la zone de cette périphérie qui, située en regard de la zone correspondante de l'autre molette, définit avec celle-ci le passage de travail dans lequel se fait le soudage recherché.

Ainsi, dans un tel passage de travail, la surface de contact du fil avec les tôles à souder est cintrée, à l'image de la molette sur laquelle ce fil est passé.

Une telle machine a donné et donne encore satisfaction.

Mais elle conduit cependant à certains inconvénients, qui ont trait notamment à la géométrie de la soudure obtenue et à l'homogénéité du métal soudé intéressé par cette soudure, et qui sont les suivants :

Pendant le soudage, lors d'une impulsion du courant correspondant, les fils assurant ce soudage s'incrustent dans le métal des tôles à souder, qui se trouve alors fondu ; ils y impriment donc leur forme, qui, comme mentionné ci-dessus, est celle des molettes sur lesquelles ils sont passés.

Compte tenu du caractère périodique de cette impulsion, il en résulte longitudinalement, pour la soudure obtenue, une alternance ondulée de crêtes, ou sommets, et de creux, ou fonds, pour l'une et pour l'autre des tôles intéressées.

En effet, pour chaque impulsion du courant de soudage, le métal de ces tôles, qui est à l'état pâteux entre deux points de soudure, est refoulé longitudinalement par les électrodes entre lesquelles il défile, à l'instant où l'impulsion de courant de soudage suivante est délivrée à ces électrodes, ce qui conduit à la formation d'une crête en aval du passage de travail défini par ces électrodes.

En pratique, s'agissant du soudage d'un corps de boîte, la différence d'amplitude entre les crêtes et les creux ainsi formés est plus accentuée pour celui des bords de ce corps de boîte qui se trouve à l'intérieur de celui-ci.

En effet, cette différence d'amplitude dépend notamment du diamètre de la molette intéressée, et celle qui est mise en œuvre à l'intérieur d'un tel corps de boîte a un diamètre nécessairement limité par l'ouverture offerte par celui-ci, tandis que la molette mise en œuvre à l'extérieur de ce corps de boîte peut, si désiré, et a, en pratique, un diamètre supérieur.

Cette alternance géométrique longitudinale de crêtes et de creux dans la soudure obtenue a des incidences sur l'homogénéité de cette soudure.

En effet, une crête correspond pour le métal à une température plus faible que celle qui est la sienne dans un creux.

En outre, ce métal refoulé ayant conduit à la formation de cette crête n'est pas véritablement forgé, parce que, situé en aval du passage de travail, il n'est pas à une température suffisante et qu'il n'est pas soumis à une quelconque pression de forgeage.

Il ne se trouve pas non plus convenablement refroidi.

Il y a donc un risque d'hétérogénéité pour la soudure obtenue, et l'expérience montre qu'en effet, le métal de cette soudure est plus fragile au droit des crêtes de celle-ci qu'au droit de ses creux.

En particulier, s'agissant d'un corps de boîte qui, après soudage, est l'objet d'une opération de formage conduisant à lui imprimer des moulures, il n'est pas rare de constater, aux sommets de telles moulures, des amorces de fissure, lorsque de tels sommets coïncident avec des crêtes de la soudure, notamment pour le bord de ce corps de boîte qui se trouve à l'intérieur de celui-ci.

D'autre part, lorsque, comme expliqué ci-dessus, il y a longitudinalement une incrustation des fils des électrodes dans le métal des tôles concernées, il y a conjointement une expulsion latérale de ce métal conduisant, pour la soudure obtenue, vue en plan, à une configuration en festons.

S'agissant d'un corps de boîte dont le flan initial est verni, ces festons rendent plus délicate et plus difficile l'opération de vernissage supplémentaire, dite opération de réchampissage, qu'il est nécessaire d'appliquer après soudage à la tôle soudée pour protéger celle-ci.

La présente invention a d'une manière générale pour objet une disposition permettant d'éviter ces inconvénients, en assurant une meilleure régularité à la soudure effectuée, et présentant en outre d'autres avantages.

De manière plus précise, elle a pour objet une machine propre au soudage électrique en continu de deux tôles superposées, notamment pour corps de boîte pour conserve, du genre comportant deux électrodes ménageant entre elles un passage de travail dans lequel les tôles à souder sont admises à défiler pendant leur soudage, chacune desdites électrodes étant formée par un fil métallique, qui, passé sur une molette, de préférence rotative mais fixe en position, accompagne lesdites tôles lors de leur soudage, avec associée à la molette de l'une au moins des dites électrodes, à distance de ladite molette, au moins une roulette de soutien, en sorte que, en continuité avec ledit passage de travail, le fil métallique correspondant a un tronçon rectiligne, cette machine étant caractérisée en ce qu'au moins une roulette de soutien est disposée dans la zone du passage de travail en aval de la molette à laquelle elle est associée dans le sens du défilement des tôles à souder, pour assurer un soutien du fil métallique dans la zone du passage de travail pendant le soudage.

En pratique, s'agissant du soudage d'un corps de boîte, cette disposition est essentiellement adoptée pour celle des électrodes agissant sur le bord interne de ce corps de boîte.

Mais cette disposition peut aussi bien être adoptée pour l'une et l'autre des électrodes.

Quoi qu'il en soit, grâce à la disposition suivant l'invention, la géométrie de la soudure obtenue se trouve améliorée, et donc son homogénéité.

En effet, le tronçon rectiligne que comporte, suivant l'invention, le fil d'une des électrodes mises en œuvre en aval de la molette correspondante a pour effet, d'une part, de minimiser la formation de crêtes, et, d'autre part, de maintenir une certaine pression sur le métal qui vient d'être soudé, ce qui conduit à un forgeage efficace de celui-ci.

En outre, il conduit avantageusement à un refroidissement rapide de ce métal, et minimise le risque d'oxydation de celui-ci du fait de son contact avec lui.

Il en résulte globalement une réduction des taux de rebut pour les tôles traitées.

Le tronçon rectiligne prévu suivant l'invention sur le fil de l'une au moins des électrodes en aval de la molette correspondante conduit en outre avantageusement à un élargissement de la zone de passage offerte au courant de soudage et à un meilleur chevauchement des points de soudure assurés par ce courant. Il en résulte globalement une meilleure répartition de l'énergie de soudage, une réduction des pertes de courant, et donc de meilleures conditions de travail pour la machine concernée.

La soudure des tôles travaillées présente par ailleurs une géométrie régulière, sans festons transversaux, et avec une alternance longitudinale de crêtes et de creux atténuée.

Il en résulte globalement une plus grande facilité dans l'exécution ultérieure de l'opération de réchampissage.

Certes il est prévu, dans le brevet français n° 1 483 981, pour le fil métallique, non pas une réelle roulette de soutien, au sens de la présente invention, mais un galet de renvoi, dont il résulte, pour ce fil métallique, en continuité avec le passage de travail, un tronçon rectiligne.

Mais, ce galet de renvoi y est disposé en amont de la molette concernée, en sorte qu'il n'assure pas un réel soutien du fil métallique pendant le soudage, et que le tronçon rectiligne correspondant de celui-ci ne s'étend pas en aval de ladite molette.

Certes, également, dans le brevet français n° 1 258 185 déjà mentionné ci-dessus, il est prévu qu'une des électrodes mises en œuvre présente une surface de contact rectangulaire allongée.

Mais cette disposition y est associée avec une électrode fixe, et non avec une électrode à fil passé sur une molette, et aucune indication n'y est donnée quant à la direction d'allongement de cette électrode, quant à son implantation par rapport à l'électrode à fil associée, et quant aux avantages qui en résultent, autres que ceux d'une simplicité due à l'abandon de la mise en œuvre d'un tel fil.

Suivant l'invention, c'est au contraire une électrode à fil passé sur une molette qui présente un tel tronçon rectiligne.

De préférence, et notamment pour rendre encore plus efficace le forgeage du métal qui vient d'être soudé, entre la molette et la roulette de soutien associée à celle-ci, est disposée une pièce, dite ici par commodité sabot, qui, fixe en position, est propre au soutien du fil métallique correspondant.

Un tel sabot permet d'assurer son efficacité au tronçon rectiligne que présente suivant l'invention ce fil métallique, en l'empêchant de prendre intempestivement une flèche nuisible entre la molette et la roulette de soutien.

Mais il présente d'autres avantages.

Tout d'abord, il assure un décollement certain du fil métallique de la molette, et évite donc l'entraînement intempestif de ce fil par celle-ci.

En outre, suivant un développement de l'invention, et bien que le tronçon rectiligne que présente suivant l'invention le fil métallique assure déjà, au moins dans une certaine mesure, une protection du métal en cours de soudage, à l'égard de la corrosion par l'atmosphère ambiante, il peut avantageusement être mis en œuvre, si désiré, pour une injection de gaz inerte dans le passage de travail de nature à parfaire cette protection, notamment sur les tranches des tôles à souder.

A cet effet le sabot est creusé intérieurement d'un canal, qui débouche en regard de la tranche de la molette, et qui est susceptible d'être raccordé à une source de gaz inerte, azote par exemple.

Mais il va cependant de soi que l'injection de gaz inerte ainsi rendue possible n'est pas impérative et peut même être supprimée.

Les avantages de l'invention ressortiront d'ailleurs de la description qui va suivre, à titre d'exemple, en référence aux dessins schématiques annexés sur lesquels :

la figure 1 est une vue partielle en perspective d'un mode de réalisation d'une machine suivant l'invention ;

la figure 2 est une vue schématique en élévation de cette machine illustrant son mode d'intervention ;

la figure 3 est, à échelle supérieure, une vue partielle en élévation de la machine lors du soudage de deux tôles ;

la figure 4 est une vue en plan de deux tôles soudées à l'aide de la machine suivant la flèche IV de la figure 5 ;

la figure 5 est une vue en coupe transversale de ces tôles suivant la ligne V-V de la figure 4 ;

la figure 6 est, à échelle supérieure, une vue en coupe longitudinale de ces tôles, suivant la ligne VI-VI de la figure 4, à laquelle il est associé un bloc-diagramme du courant de soudage correspondant ;

les figures 7, 8 et 9 sont chacune respectivement des vues analogues à celles des figures 4, 5 et 6 et se rapportent à deux tôles soudées à l'aide d'une machine de l'art antérieur ;

les figures 10, 11, 12 sont des vues analogues à celle de la figure 2 et se rapportent chacune respectivement à une variante de réalisation ;

la figure 13 est, à échelle supérieure, une vue partielle en coupe longitudinale, suivant la ligne XIII-XIII de la figure 14, d'une réalisation pratique d'une telle variante ;

la figure 14 est une vue en plan de cette réalisation pratique, suivant la flèche XIV de la figure 13 ;

les figures 15, 16 et 17 en sont des vues en coupe transversale, suivant respectivement les lignes XV-XV, XVI-XVI et XVII-XVII de la figure 13.

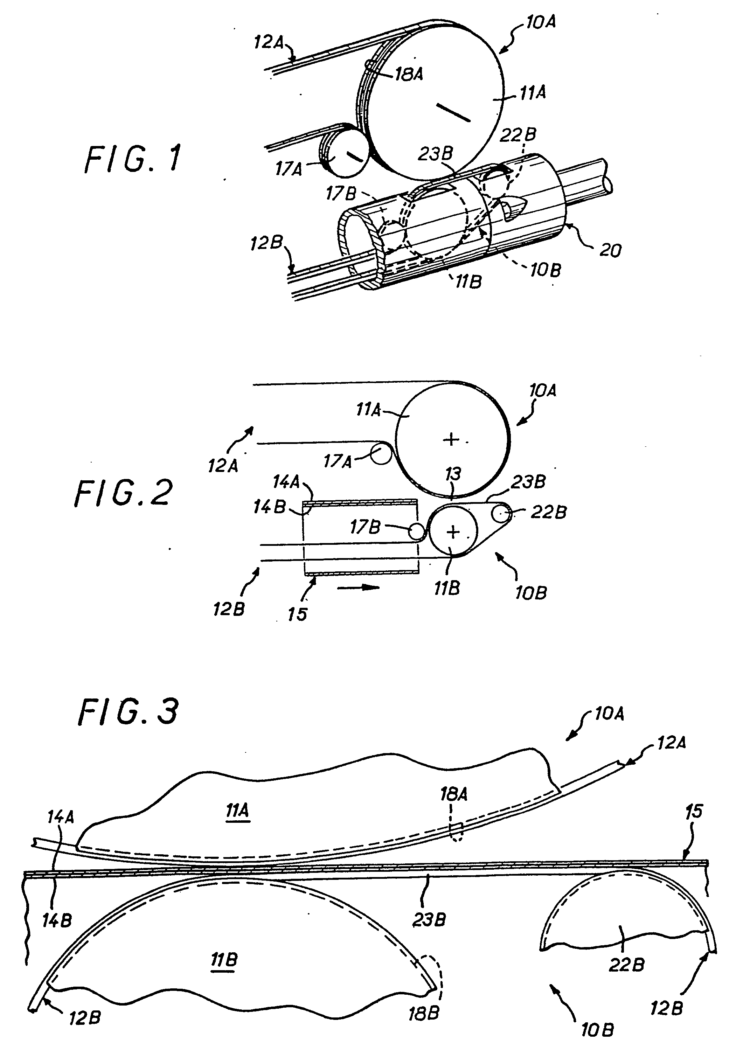

Tel qu'illustré sur les figures 1 à 3, la machine à souder est du genre comportant deux électrodes 10A, 10B, qui sont chacune formées par une molette conductrice 11A, 11B sur laquelle est passé un fil métallique 12A, 12B, et qui ménagent entre elles un passage de travail 13 dans lequel les tôles à souder 14A, 14B sont admises à défiler superposées l'une à l'autre pendant leur soudage ; de manière connue en soi, les fils 12A, 12B peuvent être des fils distincts ou appartenir à la suite l'un de l'autre à un même fil.

De préférence, les molettes 11A, 11B sont chacune montées rotatives sur un support.

Pour la molette 11A, ce support n'a pas été représenté.

Pour la molette 11B, et tel que schématisé à la figure 1, le support forme usuellement un bras cylindrique 20, sur lequel le corps de boîte à souder 15 est admis à s'engager.

Quoi qu'il en soit, et abstraction faite de leur montage en rotation, les molettes 11A, 11B sont fixes en position sur leurs supports respectifs.

Par contre, les fils 12A, 12B passés sur ces molettes 11A, 11B sont mobiles, et, en pratique, lors du soudage des tôles 14A, 14B à souder, ils accompagnent celles-ci.

Tel qu'illustré par la figure 2, les tôles 14A, 14B peuvent être formées par les bords extrêmes d'un corps de boîte 15 obtenu, de manière connue en soi, par roulage d'un flan rectangulaire initialement plat.

La molette 11A de l'électrode 10A, qui est destinée à agir sur le bord externe 14A du corps de boîte à souder 15, a un diamètre quelconque, mais celui de la molette 11B de l'électrode 10B, qui est destinée à agir sur le bord interne 14B de ce corps de boîte, est nécessairement inférieur au diamètre de celui-ci.

En pratique, et tel que schématisé, chaque molette 11A, 11B est enveloppée par le fil 12A, 12B correspondant sur une partie au moins de sa périphérie, sous l'action d'un galet d'appui 17A, 17B.

En pratique, enfin, chaque molette 11A, 11B présente sur sa tranche périphérique une gorge 18A, 18B propre à un guidage convenable du fil 12A, 12B correspondant.

Ces dispositions sont bien connues par elles-mêmes, notamment par le brevet français n° 1.258.185, et, ne faisant pas partie de la présente invention, elles ne seront pas décrites plus en détail ici.

Suivant l'invention, dans la zone du passage de travail 13, il est associé à la molette 11A, 11B de l'une au moins des électrodes 10A, 10B, à distance de celle-ci, au moins une roulette de soutien, en sorte que, en continuité avec ledit passage de travail 13, le fil métallique 12A, 12B correspondant a un tronçon rectiligne.

De préférence, cette disposition est adoptée au moins pour l'électrode 10B, c'est-à-dire pour celle destinée à agir à l'intérieur du corps de boîte 15, quand il s'agit du soudage d'un tel corps de boîte.

C'est le cas dans la forme de mise en œuvre illustrée par les figures 1, 2, dans laquelle la disposition n'est adoptée à titre d'exemple que pour la seule électrode 10B.

En outre, dans cette forme de mise en œuvre, et tel que représenté, la roulette de soutien 22B ainsi associée suivant l'invention à la molette 11B de l'électrode 10B est disposée en aval de cette molette 11B dans le sens de défilement des tôles 14A, 14B à souder : il s'agit donc, dans ce cas, d'une roulette de renvoi pour le fil 12B.

Suivant l'invention, le fil 12B constitue ainsi un tronçon rectiligne 23B entre la molette 11B et la roulette de soutien 22B sur laquelle il est passé.

Par exemple, et tel que représenté, la roulette 22B étant à niveau avec la molette 11B, ce tronçon rectiligne 23B est parallèle au sens de défilement des tôles 14A, 14B à souder.

Quoi qu'il en soit, et ainsi que l'illustre la figure 3, ce tronçon rectiligne 23B exerce avantageusement une pression de forgeage sur les tôles 14A, 14B, en aval de la zone de soudage de ces tôles.

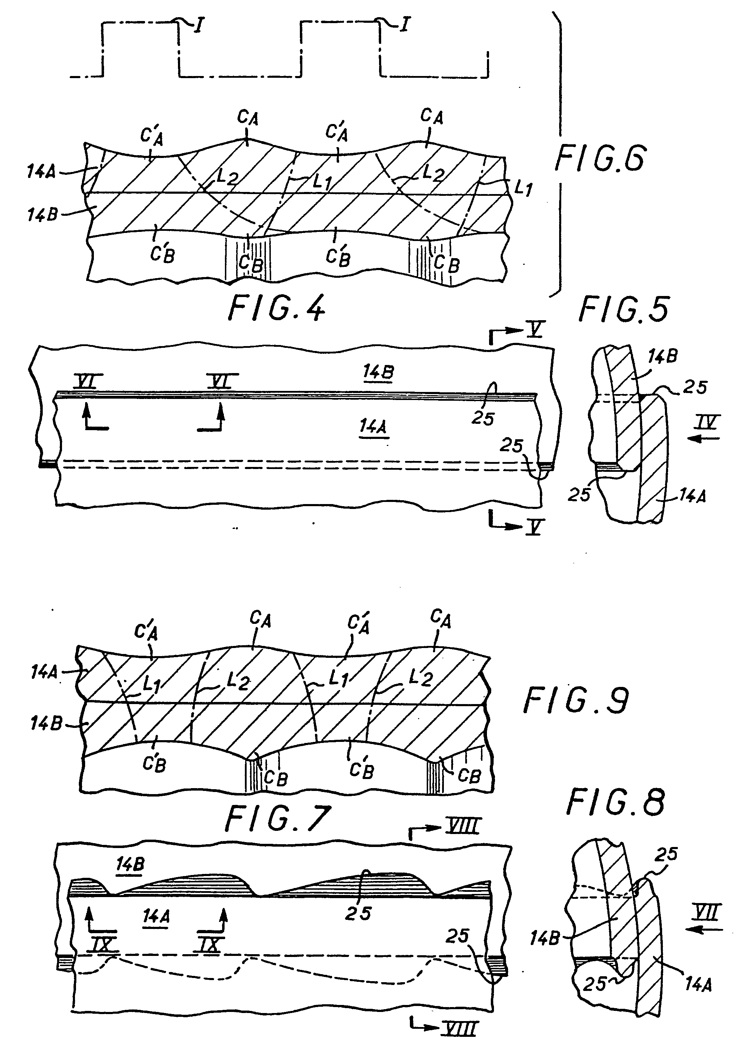

Les figures 4 à 6 illustrent l'allure de la soudure obtenue.

Longitudinalement, cette allure présente en épaisseur, tant pour la tôle 14A que pour la tôle 14B, une alternance de crêtes CA, CB et de creux C'A, C'B, mais, pour la tôle 14B, c'est-à-dire pour le bord le plus interne du corps de boîte 15, la différence d'amplitude entre les crêtes CB et les creux C'B est très atténuée par rapport à ce qu'elle est, figure 9, lorsque sont mises en œuvre, de manière traditionnelle, des électrodes dont le fil ne comporte aucun tronçon rectiligne.

Comme expliqué ci-dessus, les creux C'A, C'B correspondent aux impulsions I du courant de soudage, figure 6.

Sur la figure 6, on a schématisé en traits interrompus les lignes de champ L1, L2 correspondant à chacune de ces impulsions, les lignes L1 pour le front amont d'une telle impulsion et la ligne L2 pour le front aval de celle-ci.

Lorsque les fils des électrodes mises en œuvre ne comportent aucun tronçon rectiligne, ces lignes de champ L1, L2 sont symétriques, figure 9, et convergent l'une vers l'autre en direction de la tôle 14B la plus interne.

Elles laissent subsister, pour les tôles traitées, entre deux impulsions de courant de soudage, des zones froides, notamment au niveau des crêtes CA, CB de ces tôles.

Grâce au tronçon rectiligne 23B du fil de la molette 10B suivant l'invention, la ligne de champ L1 se trouve tirée vers l'aval, dans le sens de défilement des tôles 14A, 14B traitées, en sorte que, les lignes de champ L1, L2 divergeant dès lors l'une par rapport à l'autre en direction de la tôle la plus interne 14B, les zones demeurées froides pour celle-ci se trouvent considérablement réduites, et que, notamment, ses crêtes CB se trouvent maintenues dans une zone chaude.

Cette disposition, combinée avec la pression de contact assurée par le tronçon rectiligne 23B en question, conduit à un bon forgeage du métal concerné, ce qui est favorable à l'homogénéité de la soudure assurée.

De l'invention il résulte en outre que, transversalement, la soudure obtenue a des bords longitudinaux 25 sensiblement rectilignes, figures 4 et 5, alors que ces bords se trouvent largement festonnés, tel qu'illustré par les figures 7 et 8, lorsque le fil des électrodes mises en œuvre ne comporte pas de tronçon rectiligne.

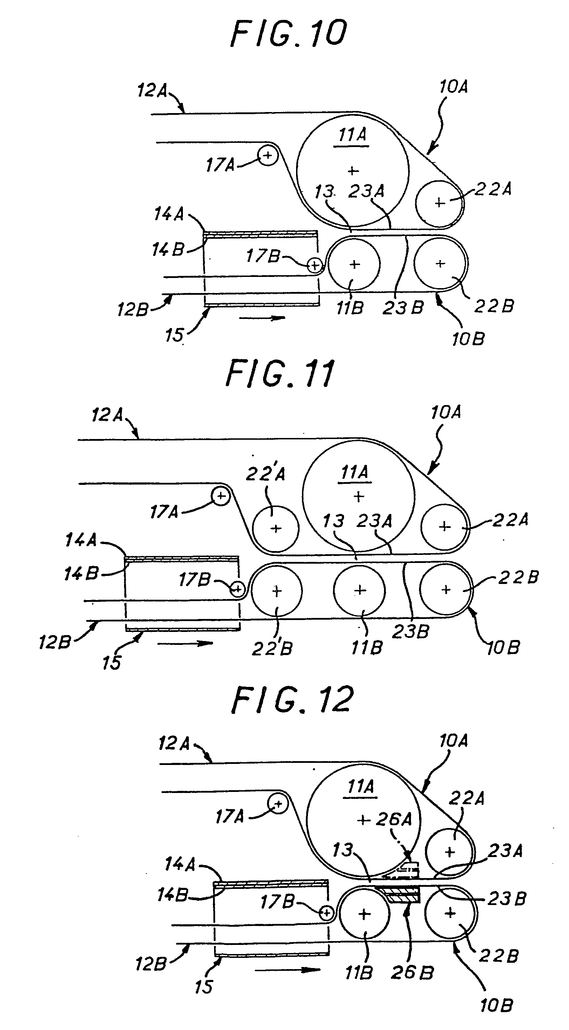

Dans la variante de mise en œuvre illustrée par la figure 10, l'une et l'autre des électrodes 10A, 10B comportent une roulette de soutien 22A, 22B, en sorte que le fil métallique correspondant 12A, 12B comporte, en continuité avec le passage de travail 13, un tronçon rectiligne 23A, 23B pour l'une et l'autre desdites électrodes 10A, 10B.

Tel que représenté, et comme précédemment, les roulettes de soutien 22A, 22B sont disposées en aval des molettes 11A, 11B auxquelles elles sont associées, dans le sens de défilement des tôles 14A, 14B à souder.

Dans la forme de mise en œuvre représentée, la roulette de renvoi 22B a des dimensions comparables à celles de la molette 11B à laquelle elle est associée, et la roulette de renvoi 22A a des dimensions semblables.

Il n'en est bien entendu pas obligatoirement ainsi.

En outre, pour l'une et/ou l'autre des électrodes 10A, 10B, une roulette de soutien peut, en sus être disposée en amont de la molette 11A, 11B à laquelle elle est associée, dans le sens de défilement des tôles 14A, 14B à souder.

Par exemple, et tel qu'illustré par la figure 11, il peut ainsi y avoir, tant pour l'électrode 10A que pour l'électrode 10B, une roulette de soutien 22A, 22B, en aval de la molette 11A, 11B correspondante, et une roulette de soutien 22'A, 22'B, en amont d'une telle molette.

Ainsi, le tronçon rectiligne 23A, 23B du fil métallique 12A, 12B correspondant s'étend avantageusement de part et d'autre du passage de travail 13.

Il va de soi, cependant, que d'autres formes de mise en œuvre peuvent être envisagées, qui combinent ou associent telles ou telles des dispositions précédentes.

Suivant un développement de l'invention, et tel que schématiquement illustré à la figure 12, sur laquelle il est appliqué, à titre d'exemple, à une forme de mise en œuvre du type de celle représentée à la figure 10, entre la molette 11A, 11B de l'une au moins des électrodes 10A, 10B, d'une part, et la roulette de soutien 22A, 22B associée à cette molette 11A, 11B, d'autre part, est disposée une pièce 26A, 26B, dite ici par commodité sabot, qui, fixe en position, est propre au soutien du fil métallique 12A, 12B correspondant, et, plus précisément, au tronçon rectiligne 23A, 23B de celui-ci.

Sur la figure 12, et à titre d'exemple, un tel sabot 26A, 26B a été prévu pour l'une et l'autre des électrodes 10A, 10B.

Mais il n'en est pas obligatoirement ainsi.

Au contraire, il peut par exemple n'être prévu que pour la seule électrode 10B, et c'est la raison pour laquelle, sur la figure 12, le sabot 26B correspondant a été représenté en trait plein, tandis que le sabot 26A associé à l'électrode 10A, supposé facultatif, n'y a été représenté qu'en traits interrompus.

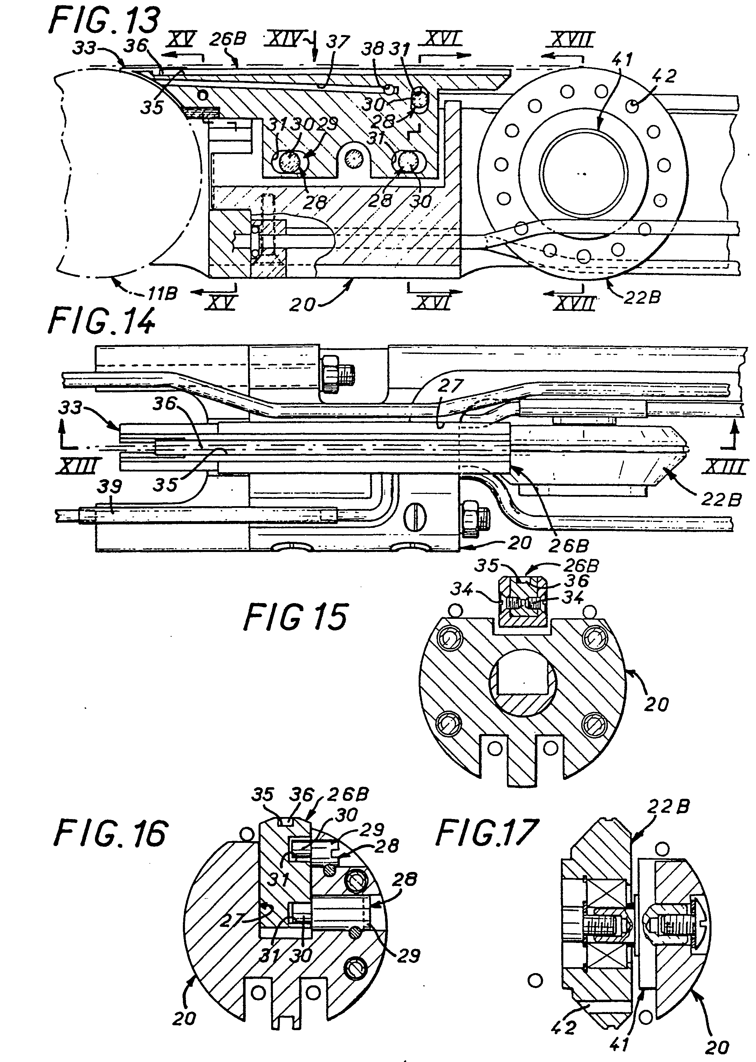

On en décrira maintenant, en référence aux figures 13 à 17, une réalisation pratique, pour la seule électrode 10B.

D'une manière générale, le sabot 26B s'étend au plus près de la molette 11B, et est monté réglable en position sur le bras de support 20 portant celle-ci.

Par exemple, et tel que représenté, le sabot 26B se présente sous la forme générale d'une plaquette convenablement détournée, qui est engagée à coulissement dans une fente 27 du bras de support 20, et auquel il est associé, pour son réglage en position sur ce bras de support 20, trois excentriques 28.

Deux de ces excentriques 28, qui sont échelonnés l'un par rapport à l'autre le long du bras de support 20, en permettent un réglage transversal en hauteur, tandis que le troisième, qui est disposé à l'écart des précédents, en permet un réglage longitudinal en distance par rapport à la molette 11B.

Chacun de ces excentriques 28 comporte une vis 29 dont le fût fileté, engagé à vissage dans un perçage taraudé du bras de support 20, se prolonge par un téton excentré 30 en prise avec une boutonnière 31 du sabot 26B.

Le sabot 26B, comme le bras de support 20, est en métal ou alliage ordinaire, laiton par exemple.

Pour son contact éventuel avec la molette 11B, et pour éviter alors qu'il s'agisse d'un contact métal sur métal, il porte de préférence, et tel que représenté, en saillie à son extrémité correspondante, une pièce 33, dite ici par commodité nez, qui est en une matière autre que métallique, et par exemple en matière synthétique, et qui suit au plus près le contour de la molette 11B, sur une partie au moins dudit contour.

Dans la forme de réalisation représentée, ce nez 33a, transversalement, une configuration en U, et il est rapporté sur l'extrémité concernée du sabot 26B par deux vis 34, figure 15.

Il fait par exemple saillie de quelques dixièmes de millimètres par rapport à ladite extrémité du sabot 26B.

Pour soutien du fil 12B, et plus précisément du tronçon rectiligne 23B de celui-ci, le sabot 26B porte longitudinalement en surface une réglette 36 en matériau dur, tel que carbure métallique ou céramique par exemple.

Par exemple, cette réglette 36 est rapportée par collage dans une rainure 35 que présente à cet effet le sabot 26B.

Dans la forme de mise en œuvre illustrée, le sabot 26B, qui est destiné à assurer un soutien du fil 11B pour parfaire le forgeage du métal en cours de soudage, est avantageusement mis à profit pour assurer, si désiré, une injection éventuelle de gaz inerte dans le passage de travail 13.

A cet effet, et tel que représenté, il est creusé intérieurement d'un canal longitudinal 37, qui débouche en regard de la tranche de la molette 11B, entre les ailes du nez 33, et qui, par un perçage latéral 38 et une canalisation 39 en continuité avec ce dernier, est susceptible d'être raccordé à une source de gaz inerte, azote par exemple.

Mais, compte tenu du confinement déjà assuré de la zone de travail par le seul sabot 26B, l'injection d'un tel gaz inerte n'est pas indispensable.

Cependant, tel que mentionné ci-dessus, elle est avantageusement de nature à éviter une éventuelle corrosion de la tranche des tôles 14A, 14B à souder.

Il va de soi que le nez 33 du sabot 26B ne touche pas nécessairement la molette 11B.

Au contraire, et du fait que, par un tel contact, il ne manque pas d'être l'objet d'une certaine usure, il est en pratique à très légère distance de la molette 11B.

Il en résulte, bien entendu, dans ce cas, lorsqu'une injection de gaz inerte est pratiquée, une fuite latérale de ce gaz inerte.

Mais une telle fuite demeure acceptable, compte tenu, d'une part de l'étroitesse des interstices correspondants, et d'autre part des très faibles quantités de gaz inerte réellement injecté.

Cependant, si désiré, et suivant une variante de réalisation non représentée, le nez 33 du sabot 26B peut être monté coulissant longitudinalement sur celui-ci, et être soumis à des moyens élastiques, ressort par exemple, le sollicitant en permanence au contact de la molette 11B, pour un rattrapage systématique de son usure due à un tel contact.

De préférence, et tel qu'illustré sur les figures 13 à 17, la roulette de soutien 22B, comme le sabot 26B, est réglable en position sur le bras de support 20 qui la porte.

Par exemple, et tel que représenté, elle est portée par un excentrique 41, figures 13 et 17.

Pour en favoriser le refroidissement, cette roulette de soutien 22B peut, par exemple, et tel que représenté, être circulairement ajourée de perçages transversaux 42.

En variante, et comme il est usuel pour la molette 11B, il lui est associé, pour son refroidissement, une circulation d'eau.

En particulier, il n'est pas nécessaire que le tronçon rectiligne que comporte, suivant l'invention, en continuité avec le passage de travail, l'un au moins des fils mis en œuvre, soit rigoureusement parallèle au sens de défilement des tôles à souder.

Il peut au contraire n'être que sensiblement parallèle à ce sens de défilement.

Il peut même, intentionnellement, faire un angle plus ou moins accentué avec lui, tout en étant de préférence dans le plan qui, contenant la direction de ce sens de défilement, est perpendiculaire aux axes des molettes de soudage.

Le domaine d'application de l'invention ne se limite pas non plus au soudage de corps de boîtes pour boîtes pour conserve à propos desquelles elle a été plus particulièrement décrite, mais s'étend au contraire à celui du soudage en continu de n'importe quelles tôles superposées.

**Revendications**

1. Machine propre au soudage électrique en continu de deux tôles superposées, notamment pour corps de boîte, de boîte pour conserve, du genre comportant deux électrodes (10A, 10B) ménageant entre elles un passage de travail (13) dans lequel les tôles (14A, 14B) à souder sont admises à défiler pendant leur soudage, chacune desdites électrodes (10A, 10B) étant formée par un fil métallique (12A, 12B) qui, passé sur une molette (11A, 11B) de préférence rotative mais fixe en position, accompagne lesdites tôles lors de leur soudage, avec, associée à la molette (11A, 11B) de l'une au moins desdites électrodes, à distance de ladite molette, au moins une roulette de soutien (22A, 22B) en sorte que, en continuité avec ledit passage de travail (13), le fil métallique (12A, 12B) correspondant à un tronçon rectiligne (23A, 23B), caractérisée en ce qu'au moins une roulette de soutien (22A, 22B) est disposée dans la zone du passage de travail (13) en aval de la molette (11A, 11B) à laquelle elles est associée, dans le sens de défilement des tôles à souder, pour assurer un soutien du fil métallique (12A, 12B) dans la zone du passage de travail (13) pendant le soudage.

2. Machine suivant la revendication 1, caractérisée en ce que, une roulette de soutien (22A, 22B) étant à niveau avec la molette (11A, 11B) à laquelle elle est associée, le tronçon rectiligne (23A, 23B) du fil métallique (12A, 12B) correspondant est sensiblement parallèle au sens de défilement des tôles (14A, 14B) à souder.

3. Machine suivant l'une quelconque des revendications 1, 2, caractérisée en ce que, entre la molette (11A, 11B) et la roulette de soutien (22A, 22B) associée à celle-ci, est disposée une pièce (26A, 26B), dite ici par commodité sabot, qui, fixe en position, est propre au soutien du fil métallique (12A, 12B) correspondant.

4. Machine suivant la revendication 3, caractérisée en ce que ledit sabot (26A, 26B) s'étend au plus près de la molette (11A, 11B).

5. Machine suivant l'une quelconque des revendications 3, 4, caractérisée en ce que le sabot (26A, 26B) est monté réglable en position sur un bras de support (20), par exemple à l'aide d'au moins un excentrique (28).

6. Machine suivant l'une quelconque des revendications 3 à 5, caractérisée en ce que, pour contact éventuel avec la molette (11A, 11B) le sabot (26A, 26B) porte en saillie, à son extrémité correspondante, une pièce (33), dite ici par commodité nez, qui est de préférence en matière synthétique, et qui suit au plus près le contour de ladite molette (11A, 11B) sur une partie au moins dudit contour.

7. Machine suivant l'une quelconque des revendications 3 à 6, caractérisée en ce que, pour soutien du fil (12A, 12B), le sabot (26A, 26B) porte longitudinalement en surface une réglette (36) en matériau dur, tel que carbure métallique ou céramique par exemple.

8. Machine suivant l'une quelconque des revendications 3 à 7, caractérisée en ce que, pour injection éventuelle d'un gaz inerte dans le passage de travail (13), le sabot (26A, 26B) est creusé intérieurement d'un canal (37), qui débouche en regard de la tranche de la molette (11A, 11B) et qui est susceptible d'être raccordé à une source de gaz inerte.

9. Machine suivant l'une quelconque des revendications 1 à 8, caractérisée en ce que, s'agissant du soudage d'un corps de boîte (15), l'électrode (10B) agissant à l'intérieur d'un tel corps de boîte (15), au moins, comporte une roulette de soutien (22B).

**Claims**

1. A machine for continuous electrical resistance welding of two superposed metal sheets, notably for bodies of foodstuff tins, of the kind comprising two electrodes (10A, 10B) forming between themselves a work passage (13) in which the metal sheets (14A, 14B) to be welded are admitted for displacement during their welding, each one of the said electrodes (10A, 10B) being formed by a metal band (12A, 12B) which passes over a welding roller (11A, 11B) preferably rotatable but fixed in position, and accompanies the said metal sheets during their welding, with at least one support roller (22A, 22B) associated with the welding roller (11A, 11B) of at least one of the said electrodes and at a distance from the said electrode roller, so that in continuity with the said work passage (13), the corresponding metal band (12A, 12B) has a rectilinear section (23A, 23B), characterized in that the at least one support roller (22A, 22B) is disposed in the work passage zone (13) downstream of the electrode roller (11A, 11B) with which it is associated, relative to the direction of the displacement of the metal sheets to be welded, to ensure support of the metal band (12A, 12B) in the zone of the work passage (13) during welding.

2. A machine according to claim 1, characterized in that a support roller (22A, 22B) being at the level of the electrode roller (11A, 11B) with which it is associated, the rectilinear section (23A, 23B) of the corresponding metal band (12A, 12B) is substantially parallel to the direction of displacement of the metal sheets (14A, 14B) to be welded.

3. A machine according to claim 1 or 2, characterized in that a part (26A, 26B) herein called a shoe for the sake of convenience, is disposed between the electrode roller (11A, 11B) and the support roller (22A, 22B) associated therewith, which shoe is fixed in position and adapted to support the corresponding metal band (11A, 11B).

4. A machine according to claim 3, characterized in that the said shoe (26A, 26B) extends as close as possible to the electrode roller (11A, 11B).

5. A machine according to claim 3 or 4, characterized in that the shoe (26A, 26B) is adjustably mounted in position on a support arm (20) for example with the help of at least one eccentric (28).

6. A machine according to any one of claims 3 to 5, characterized in that for possible contact with the electrode roller (11A, 11B) the shoe (26A, 26B) carries, projecting from its corresponding a part (33), herein called a noze for the sake of convenience, which is preferably of synthetic material and which follows as close as possible the contour of the said electrode roller (11A, 11B) along at least part of the said contour.

7. A machine according to any one of claims 3 to 6, characterized in that for supporting the band (12A, 12B) the shoe (26A, 26B) carries, longitudinally, on its surface a strip (36) of hard material, such as a metal carbide or ceramic for example.

8. A machine according to any one of claims 3 to 7, characterized in that for possible injection of an inert gas into the work passage (13), the shoe (26A, 26B) is hollowed out internally by a channel (37) which opens facing the edge of the electrode roller (11A, 11B) and which is capable of being connected to a source of inert gas.

9. A machine according to any one of claims 1 to 8, characterized in that, for welding a body (15) of a tin, the electrode (10B) acting inside such a body (15), at least, comprises one support roller (22B).

## Ansprüche

1. Maschine zum kontinuierlichen elektrischen Schweißen von zwei übereinanderliegenden Blechen, insb. Rümpfe für Dosen, für Konservendosen, des Typs, welche zwei Elektroden (10A, 10B) aufweist, die zwischen sich einen Arbeitsdurchgang (13) bilden, in welchem die zu schweißenden Bleche (14A, 14B) während ihrer Verschweißung entlanglaufen können, wobei jede der genannten Elektroden (10A, 10B) durch einen Metalldraht (12A, 12B) gebildet wird, der über eine — vorzugsweise drehbare, aber in ihrer Stellung fixierte — Scheibe (11A, 11B) läuft, welche die genannten Bleche während ihrer Verschweißung begleitet, mit wenigstens einer der Scheibe (11A, 11B) von wenigstens einer der benannten Elektroden zu- und im Abstand von der genannten Scheibe angeordneten Halterolle (22A, 22B) derart, daß bei Fortdauer des Arbeitsdurchganges (13) der Metalldraht (12A, 12B) mit einem geradlinigen Trum (23A, 23B) korrespondiert, dadurch gekennzeichnet, daß wenigstens eine Halterolle (22A, 22B) in einer Zone des Arbeitsdurchganges (13) stromabwärts von der Scheibe (11A, 11B), der sie zugeordnet ist, angeordnet ist, und zwar im Sinne der Durchlaufbewegung der zu schweißenden Bleche, um eine Unterstützung des Metalldrahtes (12A, 12B) in der Zone des Arbeitsdurchganges (13) während des Schweißens sicherzustellen.

2. Maschine nach Anspruch 1, dadurch gekennzeichnet, daß eine Halterolle (22A, 22B) sich auf dem Niveau der Scheibe (11A, 11B) befindet, der sie zugeordnet ist, und daß das geradlinige Trum (23A, 23B) des korrespondierenden Metalldrahtes (12A, 12B) deutlich parallel zu der Durchlaufrichtung der zu verschweißenden Bleche (14A, 14B) ist.

3. Maschine nach irgend einem der Ansprüche 1, 2, dadurch gekennzeichnet, daß zwischen der Scheibe (11A, 11B) und der Halterolle (22A, 22B), die dieser zugeordnet ist, ein Stück (26A, 26B) angeordnet ist, das hier aus Bequemlichkeit als Schuh bezeichnet wird, der in seiner Stellung fest in der Lage ist, den korrespondierenden Metalldraht (12A, 12B) zu halten.

4. Maschine nach Anspruch 3, dadurch gekennzeichnet, daß der genannte Schuh (26A, 26B) sich so nahe wie möglich an die Scheibe (11A, 11B) erstreckt.

5. Maschine nach irgend einem der Ansprüche 3, 4, dadurch gekennzeichnet, daß der Schuh (26A, 26B) in seiner Stellung auf einem Tragarm (20) regelbar montiert ist, beispielsweise mit Hilfe wenigstens eines Exzenters (28).

6. Maschine nach irgend einem der Ansprüche 3 bis 5, dadurch gekennzeichnet, daß für einen evtl. Kontakt mit der Scheibe (11A, 11B) der Schuh (26A, 26B) vorspringend an seinem korrespondierenden Ende ein Stück (33) trägt, das hier einfachhalber als Nase bezeichnet wird, die vorzugsweise aus Kunststoff besteht und die möglichst genau de Kontur der genannten Scheibe (11A, 11B) auf wenigstens einem Teil dieser Kontur angepaßt ist.

7. Maschine nach irgend einem der Ansprüche 3 bis 6, dadurch gekennzeichnet, daß zum Halten des Drahtes (12A, 12B) der Schuh (26A, 26B) auf seiner Fläche eine langgestreckte Leiste (36) aus einem harten Material trägt, z. B. aus Metallkarbid oder Keramik.

8. Maschine nach irgend einem der Ansprüche 3 bis 7, dadurch gekennzeichnet, daß zur evtl. Injektion eines inerten Gases in den Arbeitsdurchgang (13) der Schuh (26A, 26B) durch einen Kanal (37) im Inneren hohl ausgebildet ist, der im Bereich der Kante der Scheibe (11A, 11B) mündet und der geeignet ist, mit einer inerten Gasquelle verbunden zu werden.

9. Maschine nach irgend einem der Ansprüche 1 bis 8, dadurch gekennzeichnet, daß beim Schweißen eines Dosenrumpfes (15) wenigstens die Elektrode (10B), die im Inneren eines solchen Dosenrumpfes (15) wirksam ist, eine Halterolle (22B) trägt.

FIG. 1

FIG. 2

FIG. 3

FIG.6

FIG.4

FIG.5

FIG.9

FIG.7

FIG.8

0 041 893

## FIG. 10

## FIG. 11

## FIG. 12

3

0 041 893

FIG.13

FIG.14

FIG 15

FIG.16

FIG.17